# EUROPEAN PATENT APPLICATION

(11) **EP 1 364 759 A1**
(43) Date of publication of application: **26.11.2003**
(21) Application number: 03425321.1
(22) Date of filing: 19.05.2003
(51) Int. Cl.: B27M 1/08, B23Q 7/04, B23Q 1/52

(54) **Device to load elongated workpieces to be machined with a machine tool and machine tool comprising said device**

(30) Priority: 20.05.2002 IT FI20020082
(71) Applicant: BACCI PAOLINO DI BACCI AGOSTINO, 56021 Cascina, Pisa (IT)
(72) Inventor: Ruggieri, Alberto, 56025 Pontedera, Pisa (IT)
(74) Representative: Mannucci, Michele

(57) **Abstract**

The loading device comprises two half-loaders (13A, 13B) positioned side by side, at an adjustable distance from each other along a direction of alignment. Each of said half-loaders is provided with: a pick-up and loading means (21, 25) to pick up a workpiece from a magazine (39) and load it in a machining area, said pick-up and loading means moving along a pick-up and loading path; clamping means to clamp the workpiece in a machining position, comprising for each half-loader, a lower abutment (43) and an upper pressing device (61); and an ejector (75) to pick up and remove the machined workpiece from the machining area towards an unloading area. The upper pressing device (61) of each half-loader comprises an arm (63) carried projectingly by a load-bearing structure (67, 69) located, in relation to the machining area, on the same side as said magazine (39). The arm may adopt at least two alternative positions: a first clamping position, in which it clamps the workpiece to be machined, cooperating with the lower abutment; and a second open position, in which it is withdrawn from the machining area.

## Description

The present invention relates to a loading device to load elongated workpieces to be machined (particularly wooden elements for furniture such as chairs and the like) on a machine tool, and to unload the machine workpieces from it.

More specifically, the invention relates to a loading device of the type comprising two half-loaders positioned side by side with each other along a direction of alignment, at an adjustable distance from each other, and wherein each of said half-loaders is provided with: a pick-up and loading means to pick up a workpiece to be machined from a magazine and load it in a machining area, said pick-up and loading means moving along a pick-up and loading path; clamping means to clamp the workpiece in a machining position, comprising for each half-loader, a lower abutment and at least a pressing device or other clamping device; and an ejector to pick up and remove the machined workpiece from the machining area towards an unloading area.

A loading device of this type is described in EP-B-0509972. In this prior art device the workpiece is clamped on each half-loader between a lower abutment, which acts on the workpiece from below, and an upper stop movable from above downwards against the workpiece, which is thereby clamped between these two elements. The upper stop is carried by a vertical column which is located, with respect to the position adopted by the workpiece to be machined, on the opposite side in relation to the path along which the workpiece is fed, that is the path from the magazine to the machining area. This is necessary to allow transit of workpieces from the magazine to the machining area. Moreover, the column or other element adjacent to it, acts as a reference stop for the loaded workpiece. The drawback of this is that three of the four side faces of the workpiece are not completely accessible to the tools, due to the presence of the clamping means, while the fourth face, is entirely inaccessible due to the geometry of the system. The production of tenons on the ends of the workpieces is also limited by the clamping means, as these impede the production of tenons with substantial inclination, due to interference between the clamping means and the machine tool.

In the furniture manufacturing industry, in particular in the production of chairs and other furniture items it is, however, desirable to have machine tools and work centres capable of performing on the workpieces to be machined a large number of machinings in sequence, on the highest number of faces possible, to reduce the machining cycle and above all eliminate or reduce the need to position the workpiece several times, either on the same machine or on different machines.

The object of the present invention is to provide a loading device for machines tools or work centres which allows clamping of the workpiece to be machined in order to facilitate machining operations on it, in particular making it more accessible for the tools.

Another object of the present invention is to produce a machine tool, or work centre, with a loader for workpieces, with which it is possible to perform a plurality of machinings in a flexible way and with easy access to the workpiece. In the present description and attached claims, machine tool is intended generically as any system provided with one or more tools and with relative numeric control means for controlling the relative movements between the tool(s) and the workpiece being machined, and therefore this term will generically indicated both a simple machine tool and a more complex work centre, even equipped with several operating units or heads.

In consideration of these objects, according to a first aspect of the present invention, a loading device of the type mentioned hereinbefore is provided, in which each half-loader is provided with an upper pressing device comprising an arm carried projectingly by a load-bearing structure positioned, in relation to the machining area, on the same side as the magazine for workpieces to be machined, and wherein the arm may adopt at least two alternative positions: a first clamping position, in which it clamps the workpiece to be machined, cooperating with the lower abutment; and a second open position, in which it is withdrawn from the machining area.

The upper pressing device is thus positioned so as to avoid interference with the tools intended to machine the workpiece. Unlike prior art devices, and in particular the device described in EP-B-0509972, the workpiece may be clamped between the lower abutment and the upper pressing device remaining completely free on the side facing the operating unit(s) of the machine tool. Moreover, the projecting shape of the arm makes almost the entire upper surface of the workpiece easily accessible for the tools and does not obstruct machining of the ends of the workpiece.

The arm may have a translating or oscillating movement and may if necessary even be constituted by, for example, the rod of a piston-cylinder actuator, mounted on the load-bearing structure, with adequately extended travel to carry the pressing device, fixed to the rod, to a withdrawn position.

According to a particularly advantageous embodiment of the invention, the load-bearing structure to which the arm of the upper pressing device is anchored is constituted by: an upright integral with the respective half-loader and carried by it on the opposite side in relation to the one facing the other half-loader; and a crosspiece carried by said upright and projecting from it towards the other half-loader. The arm is advantageously carried at the free end of the crosspiece, that is at the opposite end in relation to the end anchored to the upright. With this configuration, the load-bearing structure of the arm does not interfere with the trajectory of the workpieces to be loaded in the machine tool. The loading device may therefore also handle workpieces of a substantial length, without these knocking against the load-bearing structure. The crosspiece preferably has an extension that allows the arm to be positioned over the structure of the half-loader, along which the respective means to pick up the workpieces to be machined moves.

Advantageously, the upright of the supporting structure of the arm of the upper pressing device also supports the ejector for machined workpieces by means of a further crosspiece substantially parallel to the crosspiece carrying the arm.

In principle, the movement of the arm between the two positions, machining and withdrawn respectively, may be any kind of movement. According to a preferred embodiment of the invention, however, this movement is an oscillating movement. This makes the device particularly simple. The axis of oscillation is preferably parallel to the longitudinal extension of the crosspiece supporting the arm.

The workpiece must be placed in a precise position in relation to the tools of the machine to machine it. In principle, the position to be adopted by the workpiece to be machined may be defined in any appropriate way, for example even by appropriately controlling the movement of the means that pick up the workpiece from the magazine and transfer it to the machining area. However, according to a preferred embodiment of the invention in order to position the workpiece correctly, each of the half-loaders is associated with a stop against which the workpiece to be machined is positioned by the pick-up and loading means.

According to an improved and particularly advantageous embodiment of the invention, this stop can be withdrawn from the machining area, to be positioned below the lower abutment on which the workpiece rests. In this way, once the workpiece has been taken to the position against said stop by the pick-up means of the two half-loaders and clamped between the lower abutment and the upper pressing device, the stop can be removed (for example with a downward movement) until it is withdrawn from the machining area, leaving the surface of the workpiece facing the machine tool completely free. This surface can thus be fully machined, unlike traditional systems in which at least two areas of this surface are not accessible.

The lower abutment against which the workpiece rests to be clamped may be fixed. However, in a preferred embodiment of the invention, the lower abutment can be moved vertically to adopt a lower withdrawn position, during transfer of the workpiece to be machined from the magazine to the machining area, and an upper clamping position. This simplifies movement of the workpiece and the structure of the means for transfer from the magazine to the machining area.

According to an improved embodiment of the invention, in order to obtain even greater flexibility in machining, the clamping means of each of the two half-loaders are provided with further alternative clamping members for the workpiece being machined, which clamp the workpiece when the arm of the upper pressing device is in the open position, that is when it is withdrawn from the workpiece. In this way, with a suitable machining cycle it is possible to machine the entire upper surface of the workpiece, even in the portions in which the upper pressing devices normally act.

The further alternative clamping members may be configured in various ways, according to machining requirements. However, it is generally advantageous for them to clamp the workpiece by acting on its vertical surfaces, that is on the surface facing the machine tool and on the surface opposite this. Therefore, they may comprise, for example, the stop used to position the workpiece, on which the surface of the latter facing the machine tool rests, and a vice acting against the workpiece on the opposite side in relation to said stop. The vice is advantageously movable more or less parallel to the lower abutment on which the workpiece rests.

In certain conditions it is necessary to machine workpieces of a substantial length. This is, for example, the case for elements forming the back legs and backrest of chairs. Clamping these elongated workpieces in only two points by means of the clamping means associated with the two half-loaders may at times prove to be inadequate. To obviate this drawback, in an improved embodiment of the invention, an auxiliary clamping means is provided, positioned advantageously at an adjustable distance from the respective half-loader, associated with at least one of said half-loaders and preferably with each of said half-loaders, on the opposite side in relation to the other half-loader. In this way, each workpiece may be clamped in three and preferably in four different points.

As the workpieces to be machined may be curved and have variable forms, to allow efficacious clamping, according to a preferred embodiment of the invention, advantageously the one or more auxiliary clamping means comprise a respective head swivelling around at least an axis of registration substantially horizontal and orthogonal to the direction of alignment of said two half-loaders. The swivelling head is inclined suitably to adapt to the shape of the workpiece to be clamped and carries members to clamp the workpiece.

In principle, the auxiliary clamping means may be carried by a respective adjustable upright along the same guide on which the two half-loaders are adjustable. However, according to a preferred embodiment of the invention, each of said auxiliary clamping means is carried by an upright adjustable in position along a guide integral with the respective half-loader and integral therewith. In this way the auxiliary clamping means are translated integrally with the half-loaders and do not obstruct movement along their adjustment guides.

With a loading device of the type described hereinbefore it is not yet possible also to machine, with the same machine tool, the face of the workpiece facing away from the machine tool, without repositioning the workpiece. To avoid this repositioning operation, which requires time, prolongs the machining cycle and is a source of potential errors and inaccuracies, in an improved embodiment of the present invention the lower abutment on which the workpiece rests is mounted to oscillate around an axis parallel to the direction of alignment of the two half-loaders. In this way, by rotating the workpiece clamped onto the abutment it is also possible to machine the face of it which, usually, is facing in the opposite direction in relation to the machine tool.

According to a different aspect of the present invention, in order to prevalently attain the advantage of machining workpieces of substantial longitudinal extension, a loading device is provided to load elongated workpieces to be machined, particularly in wood, into a machine tool, and to unload the machined workpieces from it, with the two half-loaders positioned side by side, at an adjustable distance from each other along a direction of alignment, and each of said half-loaders being provided with: a pick-up and loading means to pick up the workpiece to be machined from a magazine and load it in a machining area; clamping means to clamp the workpiece in a machining position, comprising for each half-loader at least a lower abutment; and an ejector to pick up and remove the machined workpiece from the machining area towards an unloading area; characterized in that an auxiliary clamping means is associated with at least one of said half-loaders on the opposite side in relation to the other half-loader.

According to a further aspect of the present invention, when one wishes to prevalently attain the result also of machining the face of the workpiece positioned on the opposite side in relation to the machine tool, a loading device is provided to load elongated workpieces to be machined, especially in wood, in a machine tool, and to unload machined workpieces from it, with two half-loaders positioned side by side, at an adjustable distance from each other along a direction of alignment, and each of said half-loaders being provided with: a pick-up and loading means to pick up a workpiece to be machined from a magazine and load it in a machining area; clamping means to clamp the workpiece in a machining position, comprising for each half-loader a lower abutment; and an ejector to pick up and remove the machined workpiece from the machining area towards an unloading area; characterized in that said lower abutment is mounted oscillating around an axis parallel to the direction of alignment of said two half-loaders.

Another object of the present invention is a machine tool to machine elongated workpieces, especially in wood, comprising two operating heads, each equipped with at least a tool, and a loading device as described hereinbefore. The two operating heads are movable along a horizontal guide, along which the two half-loaders may also be adjusted. However, according to a preferred embodiment of the invention, the two operating heads are movable along a horizontal guide parallel to the guide along which the half-loaders can be adjusted, although separate from it. This makes the machine more versatile, allowing machining of the entire longitudinal extension of the workpiece.

The invention shall now be better understood according to the description and attached drawing, which shows a non-restrictive practical embodiment of the invention. In greater detail, in the drawing:
Fig.1 shows a schematic view of the loader according to the invention fitted to a machine tool or work centre with two operating heads or units;
Fig.2 shows a section according to II-II in Fig.1;
Fig. 3 shows a section analogous to the section in Fig.2, with the workpiece clamping means in a different position;
Fig.4 shows a partial side view of a semi-loader with a top view of the pressing device in the deactivated position;
Fig.5 shows a view analogous to the view in Fig. 4 with a top view of the pressing device in the closed position;
Fig.6 shows a side view of a half-loader with the detail of the means to pick up and load the workpieces from the magazine to the machining area and of the ejector for machined workpieces;
Fig.7 shows a partial front view according to VII-VII in Fig.6;
Fig.8 shows the side view of a detail of the clamping area of the workpiece with the lower abutment and the alternative clamping parts;
Figs.9 and 10 shows views according to IX-IX and X-X in Fig.8; and
Fig.11 shows a front view of the side of the machine tool of an embodiment of the loader with the auxiliary clamping means positioned on the outside of the half-loaders.

In the example shown, the loading device has a plurality of components in combination, although it must be understood that one or more of these may be omitted, to provide simpler configurations of the device, in any case suitable to solve at least some of the problems of prior art devices.

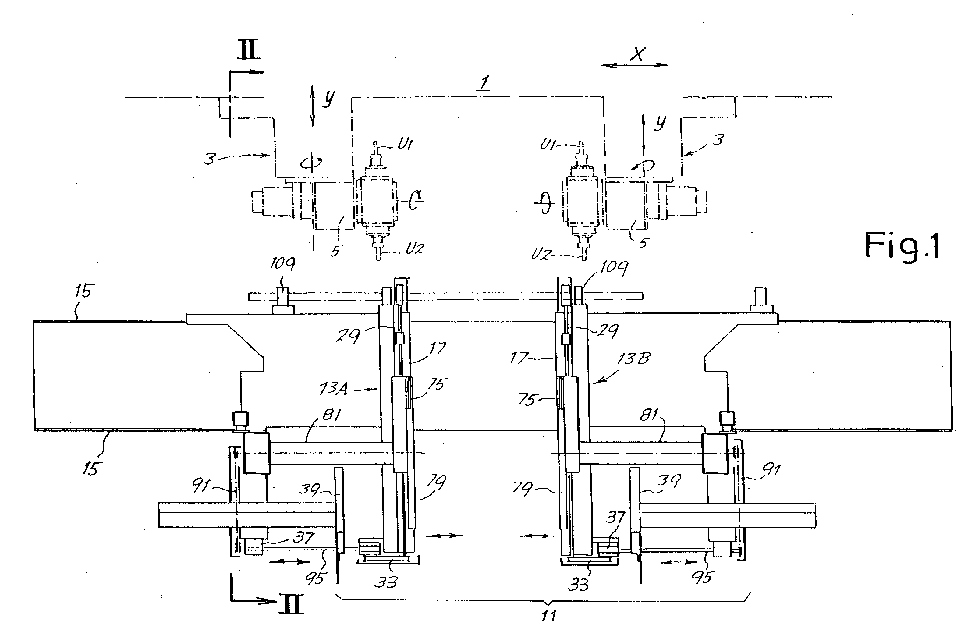

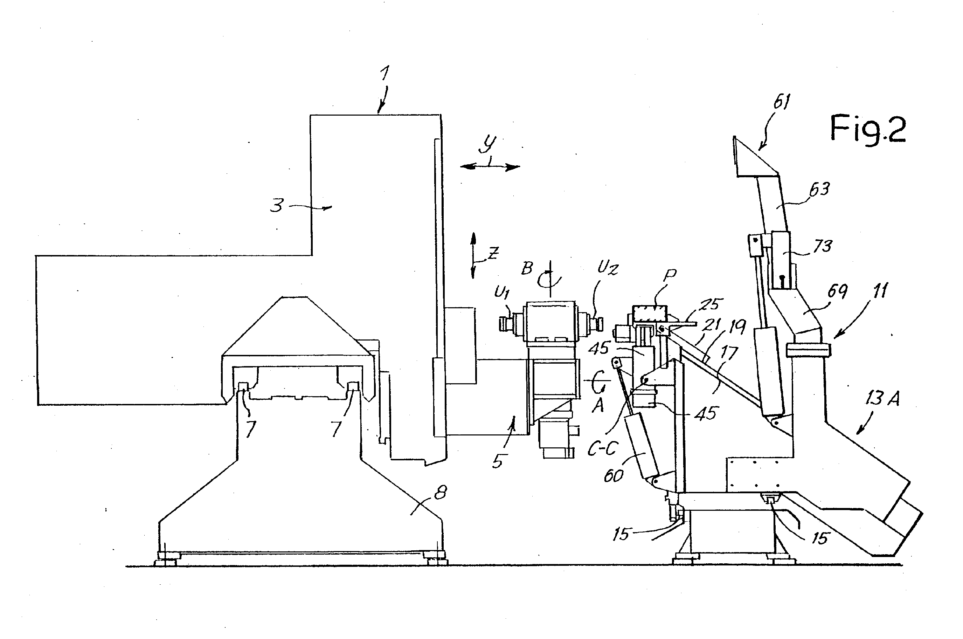

In the drawing, with particular reference to Figs. 1 and 2, the number 1 generically indicates a machine tool, equipped with two substantially symmetrical units 3, each provided with an operating head 5 with a pair of tools U1, U2. The two operating units with relative heads travel along horizontal guides 7 carried by a base 8. The movement along the guides 7 is a numerically controlled movement.

Each operating head 3 is also provided with movements along two further numerically controlled axes of translation, according to the two double arrows Y and Z, and with suitable movements of oscillation around two numerically controlled axes of oscillation, with movements indicated with A and B.

Positioned in front of the machine tool 1 is a loading device indicated as a whole with 11. The loading device 11 comprises two half-loaders indicated with 13A and 13B respectively, symmetrical and side by side with each other. The two half-loaders are movable along two horizontal guides 15, parallel to the guides 7, so that they can be positioned at a reciprocal distance selected as a function of the type and of the longitudinal extension of the workpiece to be machined. Hereinafter, a single half-loader will be described, the other being substantially symmetrical.

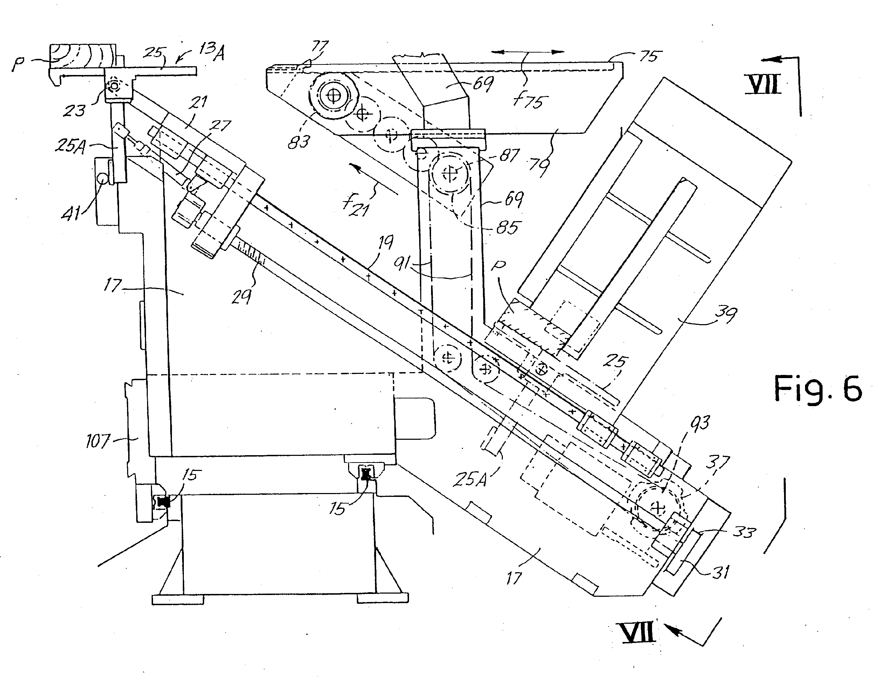

With particular reference to Fig.6, each half-loader 13A, 13B comprises a substantially vertical side 17, integral with which is a guide 19 inclined in relation to the horizontal, along which a slide 21 runs, at the front end of which, in 23 a support 25 is joined for the workpieces P to machine. The workpieces are picked up by means of the support 25 and the slide 21 of the two half-loaders 13A, 13B from a magazine 39 and transferred to a machining area, as described hereunder.

The support 25 has an appendix 25A anchored to which is one end of a pneumatic spring 27, the second end of which is anchored to the slide 21. The pneumatic spring 27 tends to maintain the upper surface of the support 25 parallel to the sliding guide 19 of the slide 21.

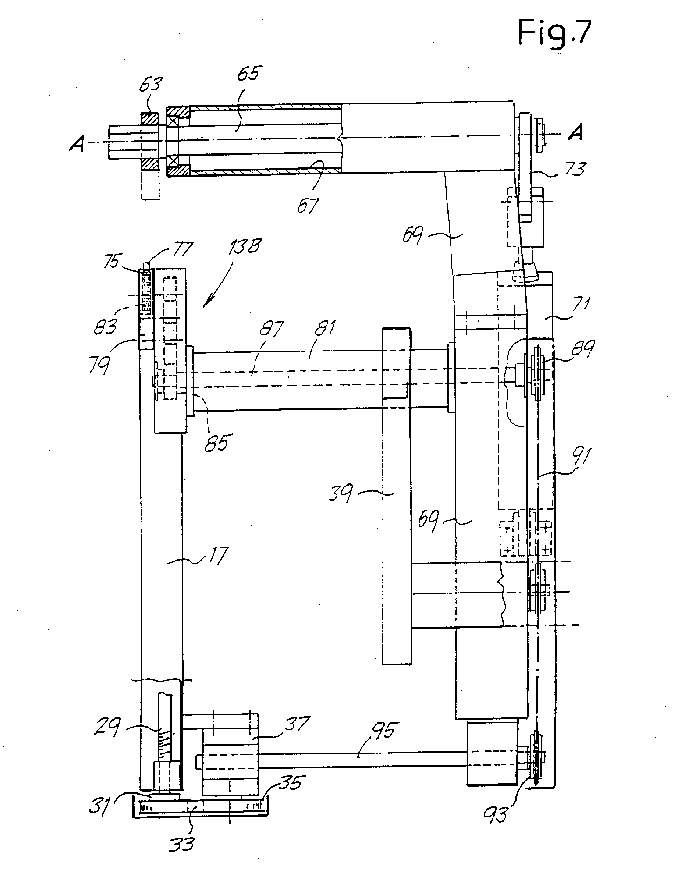

The movement of the slide 21 along the guide 19 is controlled by a threaded bar 29 carried in rotation by means of a pulley 31 keyed onto one of its ends and on which a belt 33 is driven, which receives motion from a pulley 35 operated by a geared motor 37 (see in particular Fig.7). By means of this geared motor, the slide 21 and the support 25 of the respective half-loader may be translated along the guide 19 from a position to pick up the workpieces, under a magazine 39 for workpieces P to be machined to a position to load the workpiece P in the machining area. In Fig.6 the two end positions of the slide 21 are indicated with dashed lines and solid lines respectively.

In order for the workpiece P to reach the machining position, the support 25 must be made to rotate around the joint 23 until it reaches a substantially horizontal position. This is attained by means of the appendix 25A which cooperates with a fixed stop 41 positioned in proximity to the area in which the workpiece is unloaded to be machined. In the last stretch of upward travel from the magazine 39 to the machining area of the slide 21, the appendix 25A cooperates with the stop 41 and causes oscillation of the respective support 25 against the action of the pneumatic spring 27.

Each slide 21 with the relative support 25 of each half-loader 13A, 13B thus constitutes a pick-up and loading means to pick up the single workpieces to be machined from the magazine 39 and load them into the machining area.

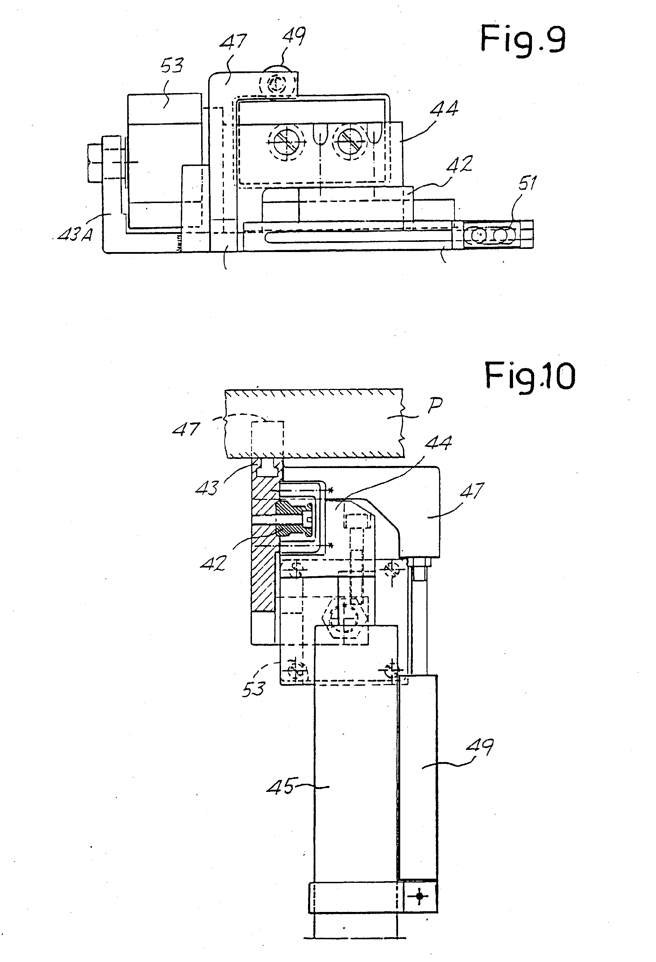

In the machining area of the workpiece P, which is located substantially at the highest portion of the two half-loaders 13A, 13B, each half-loader has means to clamp the workpiece for machining. These means are omitted for clarity of the drawing in Fig.6 and shown in greater detail in Figs.2, 3, 4, 5, 8-10.

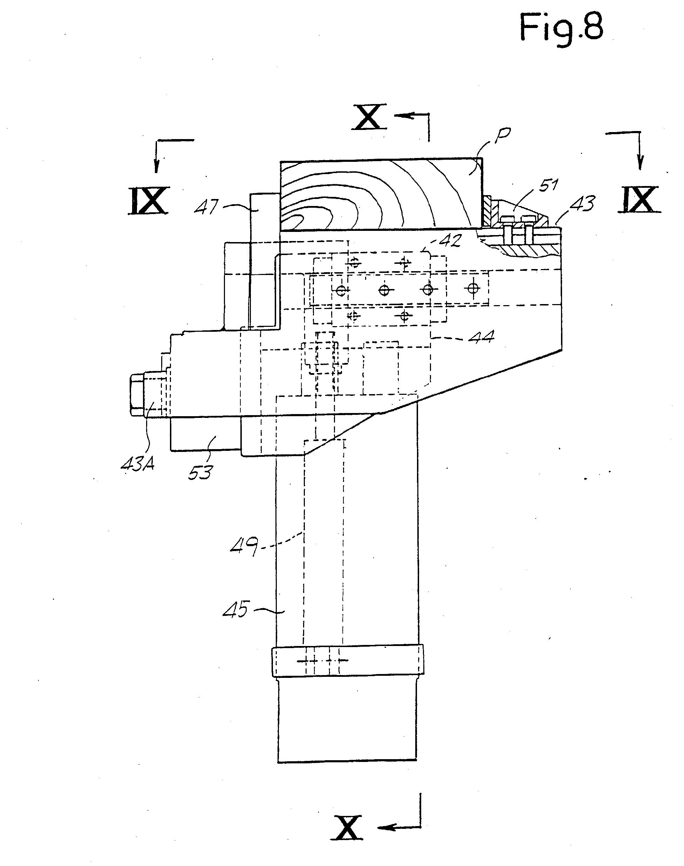

The clamping means comprise a lower abutment 43 movable vertically by means of a piston-cylinder actuator. More specifically, the lower abutment 43 is anchored, with the interposition of a guide 42, to a block 44 (see Figs. 8-10), engaged at the upper end of the rods of a double piston-cylinder actuator 45. This actuator allows the abutment 43 to lower to facilitate movement of the slide 21 and of the support 25 until the latter has reached the horizontal position, after which the abutment 43 is raised and removes the workpiece from the support 25, allowing the latter and the slide 21 to move away towards the magazine 39 along the guide 19.

Associated with the lower abutment 43 is a stop 47 which defines a surface to support and provide reference for the workpiece, orthogonal to the workpiece supporting surface defined by the lower abutment 43. The stop 47 is located, in relation to the machining position of the workpiece, on the side facing the machine tool 1. It is movable vertically to adopt a machining position, in which it protrudes over the supporting surface of the lower abutment 43, and a withdrawn position, under said supporting surface. The movement is provided by a piston-cylinder actuator 49.

The lower abutment 43 has a gib 51 integral with it, and is movable by means of a piston-cylinder actuator 53, in order to move the gib 51 closer to and farther away from the stop 47. The piston-cylinder actuator 53 is interposed between the block 44 and an appendix 43A of the lower abutment 43, so that by extending and retracting it causes the lower abutment 43 and respective gib 51 integral with it to move according to the double arrow f43 along the guide 42. This movement allows the workpiece P to be clamped between the gib 51, the lower abutment 43 and the stop 47. The device described thereby constitutes a vice for clamping the workpiece against the stop 47 when this is in the raised position, that is over the supporting surface defined by the lower abutment 43.

Alternatively to the solution illustrated, the stop 47 may be provided with movement oscillating around a horizontal axis and orthogonal to the surface in Fig.8, that is an axis parallel to the guides 15. Said axis may be found at a lower height than the supporting surface of the workpiece. With a layout of this type, in addition to the possibility of withdrawing the stop 47 (function which may also be obtained with the solution illustrated in the drawing), a further advantage is attained. Clamping of the workpiece P between the gib 51 and the stop 47 no longer requires movement according to the arrow f43, as the oscillating movement of the stop 47 may suffice to clamp the workpiece between it and the gib 51. The gib may only be adjusted to adapt the distance between it and the stop 47 in the operating position, as a function of the transverse dimension of the workpieces to be machined.

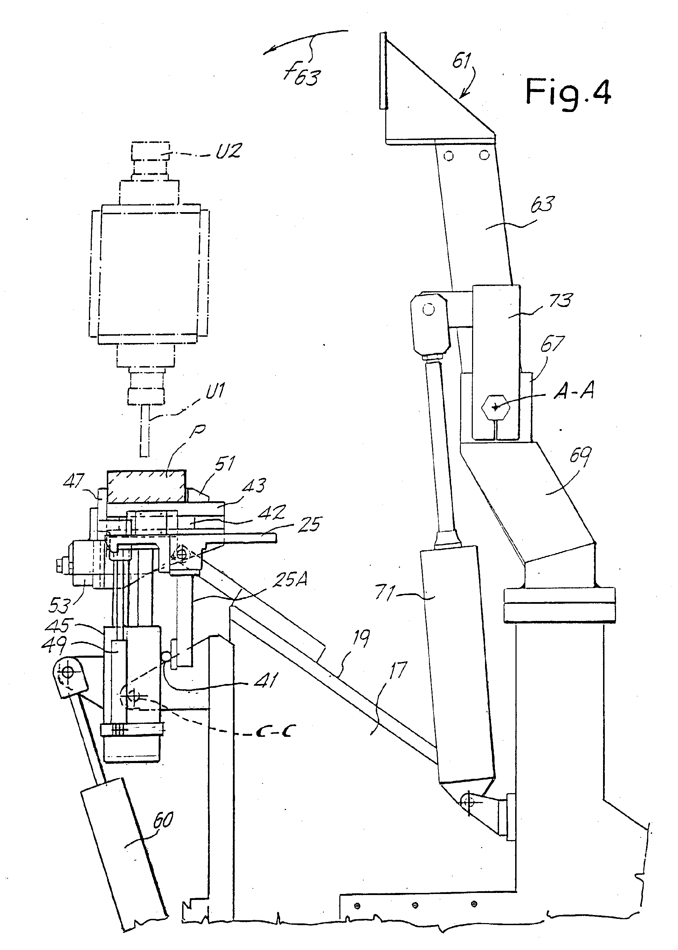

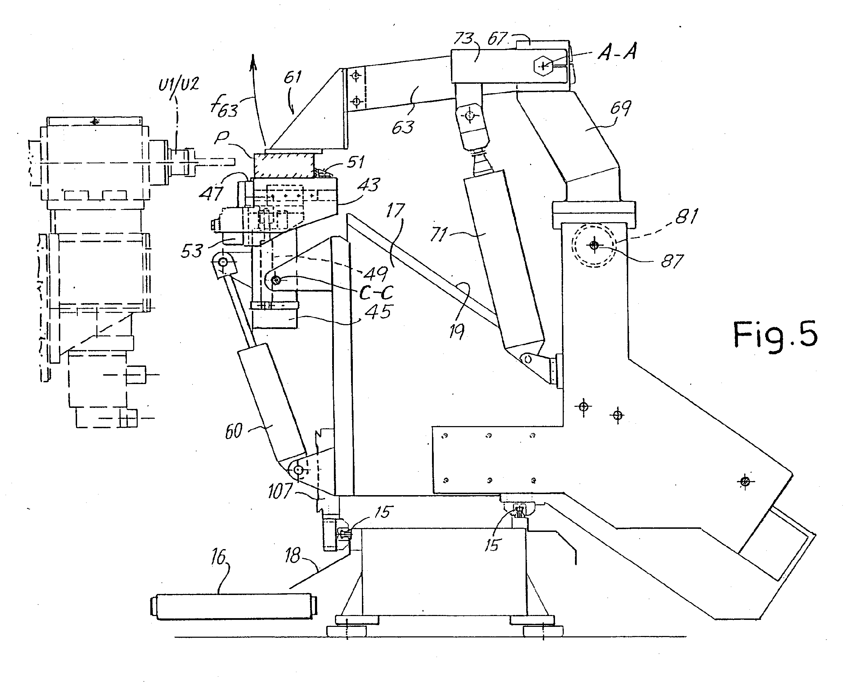

The workpiece P may be clamped to be machined (in combination with or alternatively to the means described hereinbefore) against the abutment 43, by means of an upper pressing device generically indicated with 61, associated with each half-loader. Each upper pressing device 61 has an oscillating arm 63 provided with an oscillating movement according to the arrow f63 (see in particular Figs.4 and 5) around a horizontal axis A-A, parallel to the guides 15 along which the two half-loaders 13A, 13B are aligned. The oscillating arm 63 is keyed to the end of a shaft 65 with an axis A-A, supported inside a crosspiece 67, as shown in particular in Fig.7. The crosspiece 67 is mounted projectingly on an upright 69 integral with the respective half-loader 13A or 13B. The oscillating movement of the arm 63 is controlled by a piston-cylinder actuator 71, the rod of which is engaged with the shaft 65 by means of a lever 73 at the end opposite to the end at which the arm 63 is engaged. The arrangement is such that the upright 69 and the piston-cylinder actuator 71 do not interfere with the trajectory of the workpiece P to be machined, or with the trajectory of the machined workpiece which is unloaded. The latter is a horizontal trajectory defined (Fig.6) by the abutment 43 and by the trajectory of the slider 75 which will be described hereunder. The workpiece may protrude even by a considerable length in relation to the supporting surface of the guide 19 of the half-loader 13A, 13B, as may be understood by observing in Fig.7.

As can be seen in Fig.5, when the workpiece P is clamped between the abutment 43 and the upper pressing device 61, the latter only interferes to a minimum extent with the movement of the tools of the machine head 1. This is due to the fact that it is carried by the arm 63 which extends more or less horizontally (in the clamping position) towards the side of the workpiece P facing away from the side on which the workpiece is worked by the tools of the machine. This facilitates access to the workpiece and thus increases the number of possible machining operations that may be implemented on it. Moreover, when the workpiece is clamped in this way, the stop 47 may be withdrawn under the surface defined by the lower abutments 43, so that the front surface of the workpiece P, that is the one facing the machine tool 1, is completely accessible for machining. The tools may move towards the workpiece P being machined as shown with the dashed line in Fig.5.

When the upper pressing device 61 is raised and inactive (Fig.4), it is completely withdrawn from the machining area, so that the upper surface of the workpiece, that is the one on the opposite side to the abutments 43, is completely accessible to the tools of the operating heads of the machine tool, which may adopt the position shown by the dashed line in Fig.4. In this case the workpiece is clamped by means of the withdrawable stop 47 and the gib 51 integral with the abutment 43.

By using the clamping means described hereinbefore in sequence it is possible to machine the workpiece P on both ends and on the two faces, horizontal facing upwards and vertical facing the machine tool 1 respectively. Moreover, a good part of the lower surface of the workpiece may also be machined (with the exception of the area in which the abutments 43 are positioned).

The typical machining cycle may in this case include the following operations, which will be described hereunder with reference to a single half-loader 13A or 13B, but in actual fact take place identically and simultaneously on both half-loaders.

The workpiece P is picked up from the magazine 39 by means of the support 25 integral with the slide 21. The slide 21 is made to travel along the guide 19 according to the arrow f21 until the support 25 is positioned horizontally and the workpiece P is against the stop 27. The lower abutment 43 is in the withdrawn position, that is lowered in relation to the machining position, to leave the trajectory of the workpiece P free until it moves up against the stop 47. At this point the lower abutment 43 is raised and the workpiece is moved upwards by the support 25. The machining cycle may start by clamping the workpiece P between the stop 47 and the gib 51 integral with the abutment 43. To ensure correct positioning of the workpiece, with the workpiece P resting completely on the stop 43, the upper pressing unit 61 may act temporarily to press the workpiece downward and subsequently withdraw.

After being clamped between the stop 47 and the gib 51, the workpiece is machined, for example, on the upper face and possibly at the ends and if necessary on the lower face limited to the accessible areas. It may also be machined on the surface facing the machine tool 1 where machining is not obstructed by the presence of the stops 47.

Subsequently, the upper pressing device 61 is lowered and clamps the workpiece against the lower abutment 43, to allow the stop to be lowered and withdrawn. The workpiece is now clamped between the lower abutment 43 and the upper pressing devices 61 and may be machined along the entire surface facing the machine tool and at the ends, as well as on the upper surface with the exception of the areas of action of the upper pressing devices.

Once machining of the workpiece P has been completed it must be removed from the machining area to be replaced by another workpiece. For this purpose, each half-loader is provide with an ejector to pick up and remove the machined workpiece from the machining area towards the unloading area. The ejector comprises a movable slider 75 shown for clarity of the drawing only in Figs.6 and 7, the lower part of which is rack-shaped and which is provided with an elastic tooth 77 at the front. The slider 75 slides in a guide body 79 carried by a crosspiece 81 mounted projectingly on the upright 69, to which the crosspiece 67 supporting the oscillating arm 63 is also anchored. The slider 75 is more or less aligned vertically above the guide 19 of the slide 21 which transfers the workpieces to be machined from the magazine 39 to the machining area.

The slider 75 is provided with a movement according to the double arrow f75 controlled by a series of gears, the last of which, indicated with 83, meshes with the rack formed on the lower face of the slider 75. The first gear of the series, indicated with 85, is keyed onto a first end of a shaft 87 coaxial with the crosspiece 81 and on the second end of which a chain wheel 89 is keyed (Fig.7). A chain 91, which takes its motion from a further chain wheel 93, is driven around the wheel 89. The second chain wheel 93 is keyed on a shaft 95 which takes its motion from the hereinbefore described geared motor 37. Therefore, a single geared motor 37 supplies motion both to the means to transfer the workpieces from the magazine 39 to the machining area, and to the ejector which removes the machined workpieces from the machining area and transfers them to an unloading area. The kinematic chain which supplies the slider 75 with motion by means of the common geared motor 37 is designed so that the slide 21 and the cursor 75 have staggered movement. When the slide 21 moves towards the machining area to transport a workpiece to be machined, the slider 75 removes a machined workpiece from the machining area. With this layout the workpiece loading and unloading parts may be stopped in any position desired during the machining cycle in order not to interfere with the workpiece being machined and/or the tools of the machine 1.

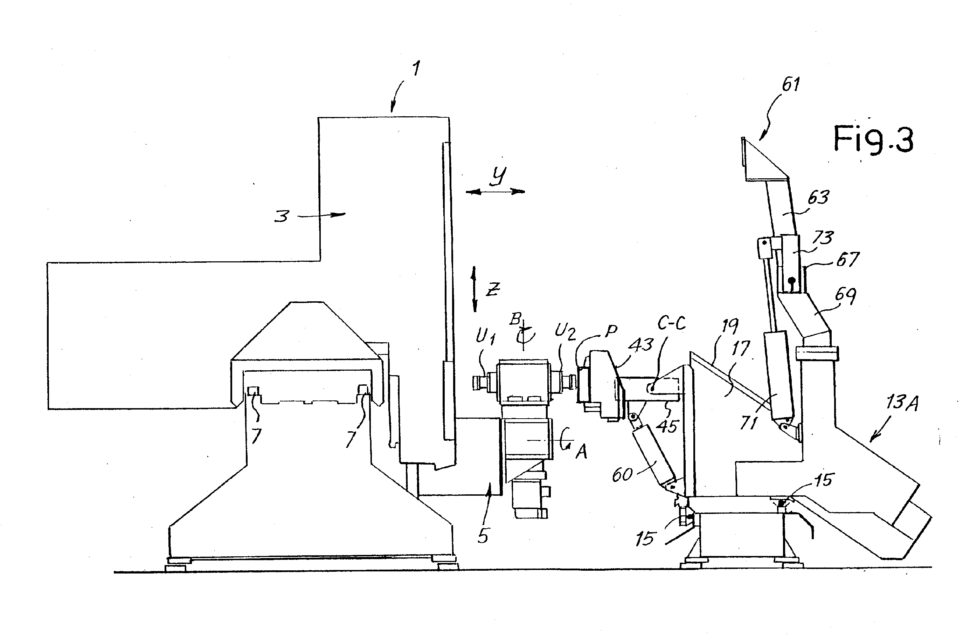

To allow access to the face of the workpiece P, which during the loading phase in the machining area is facing away from the machine tool 1, in the embodiment illustrated the lower abutment 43 with the gib 51, the movable stop 47 and the actuators 45, 49 and 53 are assembled in a unit oscillating around an axis C-C (Figs.2 to 5) parallel to the guides 15, along which the half-loaders are aligned and adjustable. This allows the device to be provided with yet another machining option: by rotating the abutment 43 around the axis C-C, when the workpiece is clamped on it, the face of the workpiece P that prior to rotation is facing the opposite side in relation to the machine, that is facing the loader 39, can face upward, making it accessible for machining by the tools of the machine 1. Figs.2 and 3 show the two angular layouts which may be adopted by the lower abutment 43 and thus by the workpiece P around the axis C-C. When the workpiece is in the layout in Fig.3, the chuck of the machine tool may be in the position shown in said figure or also in the position shown in Fig.4, to machine the workpiece from above.

The oscillating movement is provided by an actuator 60. The two actuators 60 on the two half-loaders are controlled synchronously. As an alternative to a piston-cylinder actuator such as the one shown in the drawing, a stepping motor, or other suitable actuator for numeric control, may for example be used, so that the workpiece can be blocked in any angular position around the axis C-C.

As can be seen in the attached figures, the workpiece P being machined always remains outside the overall plan dimensions of the guides 15. In this way the swarf from machining may fall in a space between the guides 15 and the machine 1. A swarf removal system may be provided in this space, such as a conveyor belt, schematically indicated with 16 only in Fig.5. To convey the swarf onto the belt a chute may be provided, as indicated with 18 in the same figure.

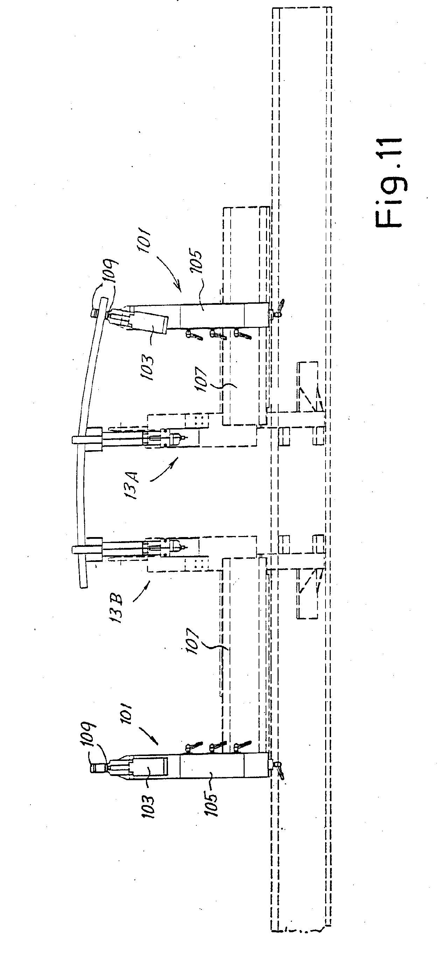

In an improved embodiment of the invention, shown schematically in a front view only in Fig. 11, in order to firmly clamp workpieces P with a substantial longitudinal extension, auxiliary clamping means, indicated as a whole at 101, are fixed respectively to each half-loader 13A, 13B. Each of these carries a head 103 supported by an upright 105. The upright 105 can be adjusted along a guide 107 integral with the respective half-loader 13A, 13B and parallel to the guides 15 along which the half-loaders 13A, 13B are aligned and adjustable in order to position the auxiliary clamping means at the desired distance in relation to the clamping means carried by the corresponding half-loader and described hereinbefore.

The inclinable head 103 carries a vice 109 or other means to clamp the workpiece. Its possibility to swing around an axis inclined by 90° with respect to the guides 15 and 107 allows clamping of a workpiece P of any shape, even with a considerable curvature on a vertical plane, as shown in Fig. 11. The height of the upright 105 may be adjustable to position the vice 109 correctly.

It must be understood that the various innovative elements of the device according to the invention may be combined in various ways with one another or used independently. In particular, the auxiliary clamping means 101 could be associated with a pair of half-loaders which are simpler than those described herein and even with a pair of half-loaders of the type described in EP-B-0509972. Analogously, the oscillability of the clamping means around the axis C-C may be considered isolated from the remaining features of the device and may also be incorporated advantageously in a loader of the type described in the aforesaid prior European patent. The characteristics of the clamping parts 43-53 are also advantageous in the absence of the clamping system from above, with the pressing device 61 and the oscillating arm 63, although this constitutes an element providing in combination with these a series of advantages in terms of versatility and machining precision.

It is understood that the drawing shows only a practical embodiment of the invention, which may vary in its forms and arrangements without however departing from the scope of the concept on which the invention is based, as defined in the attached claims. Any reference numbers in the attached claims do not limit the scope of protection whatsoever and are provided for the sole purpose of facilitating reading in the light of the preceding description.

## Claims

1. A loading device to load elongated workpieces (P) to be machined, particularly in wood, in a machine tool, and to unload from it the machined workpieces, with two half-loaders (13A, 13B) positioned side by side, at an adjustable distance from each other along a direction of alignment, and on each of said half-loaders:
• a pick-up and loading means (21, 25) to pick up a workpiece from a magazine (39) and load it in a machining area, said pick-up and loading means moving along a pick-up and loading path;
• clamping means to clamp the workpiece in a machining position, comprising for each half-loader, a lower abutment (43) and an upper pressing device (61);
• and an ejector (75) to pick up and remove the machined workpiece from the machining area towards an unloading area;
**characterized in that** the upper pressing device (61) of each half-loader comprises an arm (63) carried projectingly by a load-bearing structure (67, 69) located, in relation to the machining area, on the same side as said magazine (39), and which may adopt at least two alternative positions: a first clamping position, in which it clamps the workpiece to be machined, cooperating with the lower abutment; and a second open position, in which it is withdrawn from the machining area.

2. Device as claimed in claim 1, **characterized in that** said load-bearing structure includes: an upright (69) integral with the respective half-loader (13A; 13B) and carried by it on the opposite side in relation to the one facing the other half-loader; and a crosspiece (67) carried by said upright and projecting from it towards the other half-loader.

3. Device as claimed in claim 2, **characterized in that** said arm (63) is carried by said crosspiece (67) at the end opposite the respective upright (69).

4. Device as claimed in claim 1, 2 or 3, **characterized in that** said arm oscillates around an axis of oscillation (A-A).

5. Device as claimed in claim 2 and 4 or 3 and 4, **characterized in that** said axis of oscillation (A-A) is parallel to said crosspiece (67).

6. Device as claimed in claim 5, **characterized in that** a shaft (65) extends along said crosspiece, to one end of which shaft said arm is keyed and at the opposite end of which an actuator (71) acts to control the oscillation of said arm.

7. Device as claimed in at least claim 3, **characterized in that** said crosspiece extends approximately over the path of the pick-up and loading means.

8. Device as claimed in one or more of the preceding claims, **characterized in that** a stop (47) is associated with each of said half-loaders (13A, 13B), against which the workpiece to be machined is positioned by the pick-up and loading means.

9. Device as claimed in claim 8, **characterized in that** said stop is withdrawable from the machining area, under the lower abutment (43).

10. Device as claimed in claim 9, **characterized in that** said stop is withdrawable with an oscillating movement, said oscillating movement also acting to clamp the workpiece.

11. Device as claimed in one or more of the previous claims, **characterized in that** said lower abutment is vertically movable, to adopt a lower withdrawn position during transfer of the workpiece to be machined from the magazine to the machining area and an upper clamping position.

12. Device as claimed in one or more of the preceding claims, **characterized in that** the clamping means of each of said two half-loaders have further alternative workpiece clamping members, which clamp the workpiece when said arm is in the open position.

13. Device as claimed in claim 8 and 12 or 9 and 12, **characterized in that** said further alternative clamping members comprise said stop (47) and a vice (51, 53) acting against the workpiece on the side thereof facing away from said stop.

14. Device as claimed in claim 13, **characterized in that** said vice is movable substantially parallel to the workpiece supporting surface on the lower abutment.

15. Device as claimed in at least claim 2, **characterized in that** said upright (69) supports the ejector (75) for machined workpieces by means of a further crosspiece (81) substantially parallel to the crosspiece carrying said arm (63).

16. Device as claimed in one or more of the preceding claims, **characterized in that** an auxiliary clamping means (101) is associated with at least one of said half-loaders, on the side facing away from the other half-loader.

17. Device as claimed in claim 16, **characterized in that** the distance between said auxiliary clamping means (101) and the respective half-loader, with which it is associated, is adjustable.

18. Device as claimed in claim 16 or 17, **characterized in that** said auxiliary clamping means comprises members to clamp the workpiece, carried by a head (103) swivelling around at least an axis of registration substantially orthogonal to the direction of alignment of said two half-loaders (13A, 13B).

19. Device as claimed in at least claim 17, **characterized in that** said auxiliary clamping means is carried by a respective upright (105) adjustable along a guide (107) integral with the respective half-loader.

20. Device as claimed in one or more of the preceding claims, **characterized in that** said lower abutment (43) is mounted oscillating around an axis (C-C) parallel to the direction of alignment of said two half-loaders (13A, 13B).

21. A loading device to load elongated workpieces to be machined, particularly in wood, in a machine tool, and to unload from it the machined workpieces, with two half-loaders (13A, 13B) positioned side by side, at an adjustable distance from each other along a direction of alignment, and on each of said half-loaders:
• a pick-up and loading means (21, 25) to pick up a workpiece from a magazine (39) and load it in a machining area;
• clamping means to clamp the workpiece in a machining position, comprising for each half-loader at least a lower abutment (43);
• and an ejector (75) to pick up and remove the machined workpiece from the machining area towards an unloading area;
**characterized in that** an auxiliary clamping means (101) is associated with at least one of said half-loaders on the opposite side in relation to the other half-loader.

22. Device as claimed in claim 21, **characterized in that** the distance between said auxiliary clamping means (101) and the respective half-loader with which it is associated is adjustable.

23. Device as claimed in claim 21 or 22, **characterized in that** said auxiliary clamping means comprises clamping parts (109) to clamp the workpiece, carried by a head (103) swivelling around at least an axis of registration substantially orthogonal to the direction of alignment of said two half-loaders.

24. Device as claimed in at least claim 23, **characterized in that** said auxiliary clamping means is carried by a respective upright (105) adjustable along a guide (107) integral with the respective half-loader (13A, 13B).

25. Device as claimed in claim 24, **characterized in that** the height of said upright is adjustable.

26. A loading device to load elongated workpieces to be machined, particularly in wood, in a machine tool, and to unload from it the machined workpieces, with two half-loaders (13A, 13B) positioned side by side, at an adjustable distance from each other along a direction of alignment, and on each of said half-loaders:
• a pick-up and loading means (21, 25) to pick up a workpiece from a magazine (39) and load it in a machining area;
• clamping means to clamp the workpiece in a machining position, comprising for each half-loader at least a lower abutment (43);
• and an ejector (75) to pick up and remove the machined workpiece from the machining area towards an unloading area;
**characterized in that** said lower abutment (43) is mounted oscillating around an axis (C-C) parallel to the direction of alignment of said two half-loaders (13A, 13B).

27. Device as claimed in claim 26, **characterized in that** said clamping means comprise a stop (47) against which the workpiece to be machined is positioned by the pick-up and loading means (21, 25) and a vice (51, 53) acting against the workpiece at the face opposing said stop, said stop and said vice oscillating around said axis integrally with said lower abutment.

28. Device as claimed in claim 27, **characterized in that** said vice is movable approximately parallel to the lower abutment.

29. Machine tool to machine elongated workpieces, particularly in wood, comprising two operating heads (5), each equipped with at least one tool (U1, U2), and a loading device (11) as claimed in one or more of the preceding claims.

30. Machine tool as claimed in claim 29, wherein said two operating heads are movable along a substantially horizontal guide (7), parallel to a second substantially horizontal guide (15), along which the two half-loaders of the loading device are adjustable.

31. Machine tool as claimed in claim 29 or 30, comprising a conveyor belt (16) to remove machining swarf, extending parallel to the direction of alignment of the two half-loaders on the side of these facing the operating heads.
